# EUROPEAN PATENT APPLICATION

(11) **EP 4 789 907 A1**
(43) Date of publication of application: **12.08.2026**
(21) Application number: 25817399.6
(22) Date of filing: 16.07.2025
(51) Int. Cl.: B60L 58/10, H02J 7/00

(54) **INTEGRATED BATTERY MANAGEMENT SYSTEM AND DEVICE**

(30) Priority: 05.12.2024 CN 202423006307 U; 05.12.2024 CN 202411789159
(71) Applicant: Eve Energy Co., Ltd., Huizhou, Guangdong 516006 (CN)
(72) Inventor: WU, Yueyang, Huizhou, Guangdong 516006 (CN)
(74) Representative: Zimmermann, Tankred Klaus
(86) International application number: PCT/CN2025/108723
(87) International publication number: WO 2026/118460

(57) **Abstract**

The application relates to an integrated battery management system and device. The integrated battery management system includes a power management module and a drive control module. The power management module is configured to receive a power signal of the target battery and converts the power signal into a power supply signal adapted for the target module. The target module includes a drive control module and a control module. The drive control module is configured to acquire a status information of the target battery and converts the status information into a feedback signal adapted for the control module, so that the control module generates a drive control signal for the target battery based on the feedback signal. The drive control module is configured to perform a matching battery drive control operation on the target battery based on the drive control signal.

## Description

This application claims the priority to and benefit of Chinese Patent Application No. 202411789159.6 and 202423006307.0, both filed with China Patent Office on December 5, 2024, the entire contents of which are incorporated herein by reference.

### TECHNICAL FIELD

The present application relates to the technical field of batteries, and in particular to an integrated battery management system and device.

### BACKGROUND

With the increasing global demand for sustainable energy and the rapid development of the electric vehicle market, battery technology, especially lithium-ion batteries, has become a research hotspot.

However, currently, lithium-ion battery technology, as the mainstream battery technology, has advantages such as high energy density, long life and low self-discharge, but its management complexity is also relatively high. In order to ensure the safe use of batteries and maximize their performance, the structure of the battery management system has become increasingly complex. The complex system structure not only increases the development and deployment cost of the battery management system, but also reduces the application flexibility and execution efficiency of the system.

It can be seen that it is particularly important to improve the integration level of the battery management system and thus improve the application flexibility and execution efficiency of the battery management system.

### SUMMARY

### TECHNICAL PROBLEMS

Currently, the management complexity of lithium-ion battery technology is relatively high, the degree of integration of battery management systems is low, and the system's application flexibility and execution efficiency are low.

### TECHNICAL SOLUTIONS

The present application provides an integrated battery management system and device, which can improve the integration level of the battery management system, thereby improving the application flexibility and execution efficiency of the battery management system.

In order to solve the above technical problems, a first aspect of the present application discloses an integrated battery management system, including a power management module and a drive control module, wherein:
a first terminal of the power management module is electrically connected to a first terminal of the drive control module, a second terminal of the power management module and a second terminal of the drive control module are both configured to electrically connect to a target battery, a third terminal of the power management module and a third terminal of the drive control module are both configured to electrically connect to a control module, and a fourth terminal of the drive control module is configured to electrically connect to a load device;
the power management module is configured to receive a power signal of the target battery and convert the power signal into a power supply signal adapted for a target module, wherein the target module includes the drive control module and the control module;
the drive control module is configured to acquire status information of the target battery and receive the power supply signal, and convert the status information into a feedback signal adapted for the control module, so that the control module generates a drive control signal for the target battery based on the feedback signal;
the drive control module is further configured to perform a matching battery drive control operation on the target battery based on the drive control signal, wherein the battery drive control operation includes at least one of a balancing control operation or a power control operation.

As an optional implementation in the first aspect of the present application, the drive control module includes an analog front-end module and a gate driving module, wherein:
a first terminal of the analog front-end module and a first terminal of the gate driving module are both electrically connected to the first terminal of the power management module, a second terminal of the analog front-end module and a second terminal of the gate driving module are both configured to electrically connect to the target battery, a third terminal of the analog front-end module and a third terminal of the gate driving module are both configured to electrically connect to the control module, and a fourth terminal of the gate driving module is configured to electrically connect to the load device;
the analog front-end module is configured to acquire the status information of the target battery and receive the power supply signal, and convert the status information into the feedback signal adapted for the control module, so that the control module generates the drive control signal for the target battery based on the feedback signal;
the analog front-end module is further configured to perform the matching balancing control operation on the target battery based on the drive control signal;
the gate driving module is configured to perform the matching power control operation on the target battery based on the drive control signal, and receive the power supply signal.

As an optional implementation in the first aspect of the present application, the analog front-end module includes an acquisition submodule, a filtering submodule, a calculation submodule, a generation submodule, and a balancing control submodule, wherein:
a first terminal of the acquisition submodule is electrically connected to the first terminal of the power management module, a second terminal of the acquisition submodule is configured to electrically connect to the target battery, a third terminal of the acquisition submodule is electrically connected to a first terminal of the filtering submodule, a second terminal of the filtering submodule is electrically connected to a first terminal of the calculation submodule, a second terminal of the calculation submodule is electrically connected to a first terminal of the generation submodule, a second terminal of the generation submodule is configured to electrically connect to the control module, a first terminal of the balancing control submodule is configured to electrically connect to the control module, and a second terminal of the balancing control submodule is configured to electrically connect to the target battery;
the acquisition submodule is configured to acquire an initial acquisition information of the target battery and receive the power supply signal;
the filtering submodule is configured to perform a preset first filtering operation on the initial acquisition information to obtain the status information;
the calculation submodule is configured to calculate a matching value between the state information and a corresponding preset state information, wherein the matching value indicates a degree of matching between the state information and the corresponding preset state information;
the generation submodule is configured to generate the feedback signal adapted for the control module based on the matching value and the state information;
the balancing control submodule is configured to perform the matching balancing control operation on the target battery based on the drive control signal;
the calculation submodule includes a multiplexer, an ADC, a filter, and a comparator, wherein:
a first terminal of the multiplexer is electrically connected to the second terminal of the filtering submodule, a second terminal of the multiplexer is electrically connected to a first terminal of the ADC, a second terminal of the ADC is electrically connected to a first terminal of the filter, a second terminal of the filter is electrically connected to a first terminal of the comparator, and a second terminal of the comparator is electrically connected to the first terminal of the generation submodule.

As an optional implementation in the first aspect of the present application, the balancing control submodule includes a parsing unit and a control unit, wherein:
a first terminal of the parsing unit is configured to be electrically connected to the control module, a second terminal of the parsing unit is electrically connected to a first terminal of the control unit, and a second terminal of the control unit is configured to be electrically connected to the target battery;
the parsing unit is configured to parse the drive control signal to obtain a balancing control strategy for the target battery, wherein the balancing control strategy indicates at least one target battery cell to be balanced in the target battery and the control unit corresponding to each target battery cell;
the control unit is configured to perform the matching balancing control operation on the corresponding target battery cell according to the balancing control strategy;
the control unit includes a first resistor, a second resistor and a control switch, wherein:
for each target battery cell, a positive electrode of the target battery cell is electrically connected to a first terminal of the first resistor in the control unit corresponding to the target battery cell, a second terminal of the first resistor in the control unit corresponding to the target battery cell is electrically connected to a first terminal of the control switch in the control unit corresponding to the target battery cell, a second terminal of the control switch in the control unit corresponding to the target battery cell is electrically connected to the second terminal of the parsing unit, a third terminal of the control switch in the control unit corresponding to the target battery cell is electrically connected to a first terminal of the second resistor in the control unit corresponding to the target battery cell, and a second terminal of the second resistor in the control unit corresponding to the target battery cell is electrically connected to a negative electrode of the target battery cell.

As an optional implementation in the first aspect of the present application, the gate driving module includes a parsing submodule, a determination submodule, a drive control submodule and a charge and discharge switch submodule, wherein:
a first terminal of the parsing submodule is configured to be electrically connected to the control module, a second terminal of the parsing submodule is electrically connected to the first terminal of the power management module, a third terminal of the parsing submodule is electrically connected to a first terminal of the determination submodule, a second terminal of the determination submodule is electrically connected to a first terminal of the drive control submodule, a second terminal of the drive control submodule is electrically connected to a first terminal of the charge and discharge switch submodule, a second terminal of the charge and discharge switch submodule is configured to be electrically connected to the target battery, and a third terminal of the charge and discharge switch submodule is configured to be electrically connected to the load device;
the parsing submodule is configured to parse the drive control signal to determine attribute information of the drive control signal, wherein the attribute information includes at least one of transmission channel information, conversion record information, signal type information, or signal form information;
the parsing submodule is further configured to receive the power supply signal;
the determination submodule is configured to determine a power control parameter corresponding to the drive control signal based on the attribute information;
the drive control submodule is configured to control the charge and discharge switch submodule to perform the matching power control operation on the target battery based on the power control parameter.

As an optional implementation in the first aspect of the present application, the charge and discharge switch submodule includes one or more groups of charge and discharge switches each corresponding to a different attribute information, wherein the groups of charge and discharge switches are electrically connected in parallel;
wherein, for each of the one or more groups of charge and discharge switches, a first terminal of the group of charge and discharge switches is electrically connected to the second terminal of the drive control submodule, a second terminal of the group of charge and discharge switches is configured to electrically connect to the target battery, and a third terminal of the group of charge and discharge switches is configured to electrically connect to the load device;
wherein the group of charge and discharge switches includes a charge switch and a discharge switch, wherein:
a first terminal of the charge switch is electrically connected to a first terminal of the discharge switch, a second terminal of the charge switch is electrically connected to the load device, a third terminal of the charge switch is electrically connected to the second terminal of the drive control submodule, a second terminal of the discharge switch is electrically connected to the target battery, and a third terminal of the discharge switch is electrically connected to the second terminal of the drive control submodule.

As an optional implementation in the first aspect of the present application, the power management module includes a protection submodule and a conversion submodule, wherein:
a first terminal of the protection submodule is configured to electrically connect to the target battery, a second terminal of the protection submodule is electrically connected to a first terminal of the conversion submodule, a third terminal of the protection submodule is electrically connected to the first terminal of the drive control module, and a fourth terminal of the protection submodule is configured to electrically connect to the control module;
the protection submodule is configured to receive the power signal of the target battery;
the conversion submodule is configured to convert the power signal into a preliminary power supply signal adapted for the target module;
the protection submodule is further configured to perform a preset second filtering operation on the preliminary power supply signal to obtain the power supply signal adapted for the target module.

As an optional implementation in the first aspect of the present application, the protection submodule includes a first filtering and protection unit and a second filtering and protection unit, wherein:
a first terminal of the first filtering and protection unit is electrically connected to the target battery, a second terminal of the first filtering and protection unit is electrically connected to the first terminal of the conversion submodule, a first terminal of the second filtering and protection unit is electrically connected to the first terminal of the conversion submodule, a second terminal of the second filtering and protection unit is electrically connected to the first terminal of the drive control module, and a third terminal of the second filtering and protection unit is electrically connected to the control module;
the first filtering and protection unit is configured to receive the power signal of the target battery;
the second filtering and protection unit is configured to perform the preset second filtering operation on the preliminary power supply signal to obtain the power supply signal adapted for the target module;
the conversion submodule includes a first conversion unit and at least one second conversion unit, wherein each of the at least one second conversion unit corresponds to at least one said target module, the first conversion unit is a boost unit, and the second conversion unit is at least one of a buck unit, a linear regulator, or a charge pump, wherein:
a first terminal of the first conversion unit is electrically connected to the second terminal of the first filtering and protection unit, a second terminal of the first conversion unit is electrically connected to a first terminal of the second conversion unit, and a second terminal of the second conversion unit is electrically connected to the first terminal of the second filtering and protection unit;
the first conversion unit is configured to convert the power signal into an initial power supply signal;
the second conversion unit is configured to convert the initial power supply signal into the preliminary power supply signal adapted for the target module.

As an optional implementation in the first aspect of the present application, the system further includes a real-time clock module, wherein:
a first terminal of the real-time clock module is electrically connected to a fourth terminal of the power management module, a second terminal of the real-time clock module is configured to electrically connect to the control module, and the target module further includes the real-time clock module;
the real-time clock module is configured to generate clock information and send the clock information to the control module, and receive the power supply signal, wherein the clock information is configured to instruct the control module to sleep or wake up.

A second aspect of the present application discloses an integrated battery management device, including a device body and the integrated battery management system according to the first aspect of the present application.

### BENEFICIAL EFFECTS

Compared with the related art, the embodiments of the present application have the following beneficial effects:

In an embodiment of the present application, the integrated battery management system includes a power management module and a drive control module, wherein: the power management module is configured to receive a power signal of the target battery and converts the power signal into a power supply signal adapted for the target module, and the target module includes a drive control module and a control module; the drive control module is configured to acquire status information of the target battery and converts the status information into a feedback signal adapted for the control module, so that the control module generates a drive control signal for the target battery based on the feedback signal; the drive control module is configured to perform a matching battery drive control operation on the target battery based on the drive control signal, and the battery drive control operation includes at least one of a balancing control operation and a power control operation. It can be seen that the implementation of the present application can integrate the power management module and the drive control module into the battery management system. The power management module is configured to receive a power signal of the target battery and converts the power signal into a power supply signal adapted for the drive control module and the control module to ensure that the drive control module in the battery management system and the control module outside the system are adequately supplied with power, thereby improving operational stability. The drive control module is configured to acquire a status information of the target battery and converts the status information into a feedback signal adapted for the control module, so that the control module generates a drive control signal for the target battery based on the feedback signal; the drive control module is configured to perform a matching battery drive control operation on the target battery based on the drive control signal, including at least one of a balancing control operation or a power control operation. While ensuring the accuracy and stability of information exchange between the target battery and the battery management system, the integration of the battery management system is improved, the structure of the battery management system is simplified, and the application flexibility and execution efficiency of the battery management system are improved. In addition, the flexibility and convenience of the functional expansion and development of the battery management system when facing with different communication requirements, storage requirements, control chip processing energy efficiency requirements, etc. are improved, the cost of development, deployment and maintenance of the battery management system is reduced, and it is conducive to improving the richness and diversity of application scenarios of the battery management system.

### BRIEF DESCRIPTION OF THE DRAWINGS

In order to more clearly illustrate the technical solutions in the embodiments of the present application, the following briefly introduces the drawings required for describing the embodiments.
FIG. 1 is a schematic structural diagram of an integrated battery management system according to an embodiment of the present application.
FIG. 2 is a schematic structural diagram of an integrated battery management system according to another embodiment of the present application.
FIG. 3 is a schematic structural diagram of an analog front-end module according to an embodiment of the present application.
FIG. 4 is a schematic structural diagram of a calculation submodule according to an embodiment of the present application.
FIG. 5 is a schematic structural diagram of a balancing control submodule according to an embodiment of the present application.
FIG. 6 is a schematic structural diagram of a balancing control submodule according to another embodiment of the present application.
FIG. 7 is a schematic structural diagram of a gate driving module according to an embodiment of the present application.
FIG. 8 is a schematic structural diagram of a gate driving module according to another embodiment of the present application.
FIG. 9 is a schematic structural diagram of a power management module according to an embodiment of the present application.
FIG. 10 is a schematic structural diagram of a protection submodule according to an embodiment of the present application.
FIG. 11 is a schematic structural diagram of a conversion submodule according to an embodiment of the present application.
FIG. 12 is a schematic structural diagram of an integrated battery management system according to another embodiment of the present application.
FIG. 13 is a schematic structural diagram of a real-time clock module according to an embodiment of the present application.

### DETAILED DESCRIPTION OF THE EMBODIMENTS

In order to enable people skilled in the art to better understand the solution of the present application, the technical solution in the embodiments of the present application will be described below in conjunction with the drawings in the embodiments of the present application.

It should be noted that, unless otherwise expressly specified and limited, the term "electrical connection" in the specification and claims of this application and the above-mentioned drawings should be understood in a broad sense. For example, it can be a fixed electrical connection, a detachable electrical connection, or an integral electrical connection; it can be a mechanical-electrical connection, an electrical-electrical connection, or mutual communication; it can be directly connected, or indirectly connected through an intermediate medium, or it can be internal communication between two elements or an interactive relationship between two elements. In addition, the terms "first", "second", etc. in the specification and claims of this application and the above-mentioned drawings are used to distinguish different objects, rather than to describe a specific order. The terms "including" and "having" and any variations thereof are intended to cover non-exclusive inclusions. For those of ordinary skill in the art, the specific meanings of the above terms in this application can be understood according to specific circumstances.

References herein to "embodiments" mean that a particular feature, structure, or characteristic described in connection with the embodiments may be included in at least one embodiment of the present application. The appearance of this phrase in various places in the specification does not necessarily refer to the same embodiment, nor does it constitute an independent or alternative embodiment that is mutually exclusive of other embodiments. It is understood, both explicitly and implicitly, by those skilled in the art that the embodiments described herein may be combined with other embodiments.

The present application discloses an integrated battery management system and device, which can integrate a power management module and a drive control module into the battery management system. The power management module is configured to receive a power signal from a target battery and convert the power signal into a power supply signal adapted for the drive control module and the control module, thereby ensuring that the drive control module in the battery management system and the control module outside the system are adequately supplied with power, thereby improving operational stability. The drive control module is configured to acquire status information of the target battery and convert the status information into a feedback signal adapted for the control module, so that the control module generates a drive control signal for the target battery based on the feedback signal. The drive control module is configured to perform a matching battery drive control operation on the target battery based on the drive control signal, including at least one of a balancing control operation or a power control operation. This improves the integration of the battery management system, simplifies the structure of the battery management system, and improves the application flexibility and execution efficiency of the battery management system while ensuring the accuracy and stability of information exchange between the target battery and the battery management system. In addition, it improves the flexibility and convenience of the battery management system in function expansion and development when facing with different communication requirements, storage requirements, control chip processing energy efficiency requirements, etc., reduces the cost of development, deployment, and maintenance of the battery management system, and is conducive to increasing the richness and diversity of application scenarios of the battery management system. The following are detailed descriptions.

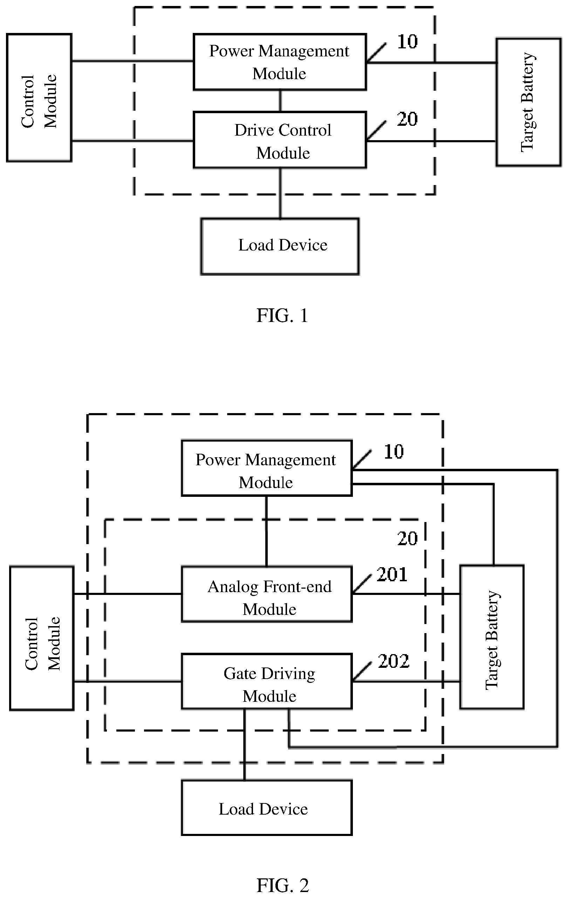

Please refer to FIG. 1, which is a schematic structural diagram of an integrated battery management system according to an embodiment of the present application. The integrated battery management system described in FIG. 1 can be applied to battery devices or to associated devices of battery device, including but not limited to one or more of cloud devices, edge computing devices, smart home devices, sensing devices, relay devices, base station devices, and intelligent network devices, which are not limited in the embodiments of the present application. As shown in FIG. 1, the integrated battery management system may include a power management module 10 and a drive control module 20.

A first terminal of the power management module 10 is electrically connected to a first terminal of the drive control module 20, a second terminal of the power management module 10 and a second terminal of the drive control module 20 are both configured to electrically connect to a target battery, a third terminal of the power management module 10 and a third terminal of the drive control module 20 are both configured to electrically connect to the control module, and a fourth terminal of the drive control module 20 is configured to electrically connect to a load device.

The power management module 10 is configured to receive the power signal of the target battery and convert the power signal into a power supply signal adapted for the target module which includes a drive control module 20 and a control module.

The drive control module 20 is configured to acquire the status information of the target battery and receive the power supply signal, and convert the status information into a feedback signal adapted for the control module, so that the control module generates a drive control signal for the target battery based on the feedback signal.

The driving control module 20 is further configured to perform a matching battery drive control operation on the target battery based on the drive control signal, where the battery drive control operation includes at least one of a balancing control operation or a power control operation.

In the embodiments of the present application, the control module is used to represent a control chip, including but not limited to MPU (Micro Processor Unit), MCU (Micro Processor Unit), SoC (System on Chip), SoPC (System On a Programmable Chip), etc.

In the embodiments of the present application, it should be noted that the first terminal, the second terminal, etc. do not mean that each terminal includes only one branch. It can be multiple branches as long as it does not affect the functions of each module and there is no contradiction in the connection relationship between the modules/units.

It can be seen that the implementation of the embodiments of the present application can integrate the power management module and the drive control module into the battery management system. The power management module is configured to receive the power signal of the target battery and convert the power signal into a power supply signal adapted for the drive control module and the control module to ensure that the drive control module in the battery management system and the control module outside the system are adequately supplied with power and improve operational stability. The drive control module is configured to acquire the status information of the target battery and convert the status information into a feedback signal adapted for the control module, so that the control module generates a drive control signal for the target battery based on the feedback signal; the drive control module is configured to perform at lease one matching battery drive control operation on the target battery based on the drive control signal, including at least balancing control operations, power control operation, thereby ensuring the accuracy and stability of information exchange between the target battery and the battery management system, improving the integration of the battery management system, simplifying the structure of the battery management system, and improving the application flexibility and execution efficiency of the battery management system. In addition, the battery management system is improved in terms of the flexibility and convenience of functional expansion and development when facing different communication requirements (CAN, LIN, etc.), storage requirements (storage capacity, storage method, etc.), control chip processing energy efficiency requirements (number of pins, number of threads, etc.), etc., reducing the cost of development, deployment and maintenance of the battery management system, which is conducive to improving the richness and diversity of application scenarios of the battery management system.

In the embodiments of the present application, as an optional implementation, as shown in FIG. 2 which is a schematic structural diagram of an integrated battery management system according to another embodiment of the present application, the drive control module 20 includes an analog front-end module 201 and a gate driving module 202.

A first terminal of the analog front-end module 201 and a first terminal of the gate driving module 202 are both electrically connected to the first terminal of the power management module 10, a second terminal of the analog front-end module 201 and a second terminal of the gate driving module 202 are both configured to electrically connect to a target battery, a third terminal of the analog front-end module 201 and a third terminal of the gate driving module 202 are both configured to electrically connect to the control module, and a fourth terminal of the gate driving module 202 is configured to electrically connect to a load device.

The analog front-end module 201 is configured to acquire status information of the target battery and receive the power supply signal, and convert the status information into a feedback signal adapted for the control module, so that the control module generates a drive control signal for the target battery based on the feedback signal.

The analog front-end module 201 is further configured to perform a matching balancing control operation on the target battery based on the drive control signal.

The gate driving module 202 is configured to perform a matching power control operation on the target battery based on the drive control signal, and to receive a power supply signal.

In this optional embodiment, the state information may optionally include but is not limited to at least one of voltage information, current information, charge information, power distribution information, or temperature information. The target battery includes at least one battery cell, and the power distribution information is used to indicate the distribution of power in all battery cells of the target battery.

It can be seen that the implementation of this optional embodiment allows the analog front-end module in the drive control module to acquire the status information of the target battery, and convert the status information into a feedback signal adapted for the control module, so that the control module generates a drive control signal for the target battery based on the feedback signal, and then the analog front-end module performs a matching balancing control operation on the target battery based on the drive control signal, and the gate driving module performs a matching power control operation on the target battery based on the drive control signal, so as to improve the accuracy, timeliness and stability of battery management control of the target battery while improving the integration accuracy and integration of the battery management system, reducing the redundancy of the battery management system, and helping to improve the application flexibility and execution efficiency of the battery management system, and helping to improve the flexibility and convenience of the battery management system in function expansion and development when facing with different communication requirements, storage requirements, control chip processing energy efficiency requirements, etc., reducing the cost of development, deployment and maintenance of the battery management system, and helping to improve the richness and diversity of application scenarios of the battery management system.

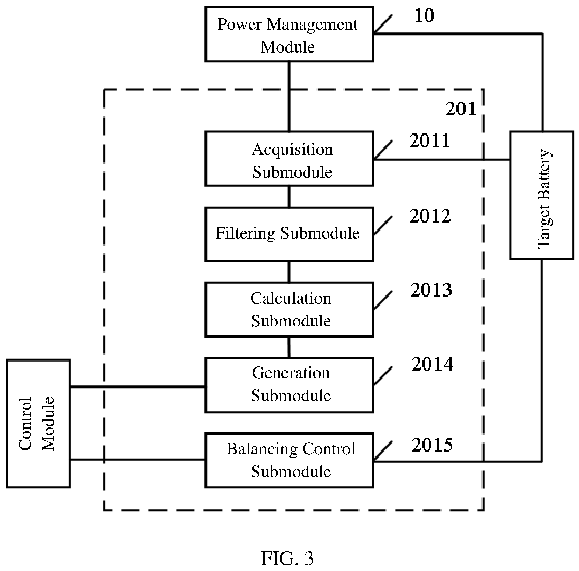

In this optional embodiment, as an optional embodiment, as shown in FIG. 3 which is a schematic structural diagram of an analog front-end module according to an embodiment of the present application. FIG. 3 focuses on the specific structure and direct connection relationship of the analog front-end module in the integrated battery management system. For other modules of the integrated battery management system disclosed above that are not directly connected, please refer to the structural diagram of the integrated battery management system disclosed in the embodiment of the present application. The same applies to the specific structural diagrams of the specific modules/units disclosed in the following embodiments, which will not be repeated below. As shown in FIG. 3, the analog front-end module 201 includes an acquisition submodule 2011, a filtering submodule 2012, a calculation submodule 2013, a generation submodule 2014, and a balancing control submodule 2015.

A first terminal of the acquisition submodule 2011 is electrically connected to a first terminal of the power management module 10, a second terminal of the acquisition submodule 2011 is electrically connected to a target battery, a third terminal of the acquisition submodule 2011 is electrically connected to a first terminal of the filtering submodule 2012, a second terminal of the filtering submodule 2012 is electrically connected to a first terminal of the calculation submodule 2013, a second terminal of the calculation submodule 2013 is electrically connected to a first terminal of the generation submodule 2014, a second terminal of the generation submodule 2014 is electrically connected to the control module, a first terminal of the balancing control submodule 2015 is electrically connected to the control module, and a second terminal of the balancing control submodule 2015 is electrically connected to the target battery.

The acquisition submodule 2011 is configured to acquire initial acquisition information of the target battery and receive a power supply signal.

The filtering submodule 2012 is configured to perform a preset first filtering operation on the initial acquisition information to obtain status information.

The calculation submodule 2013 is configured to calculate a matching value between the state information and the corresponding preset state information, where the matching value is used to indicate the degree of matching between the state information and the corresponding preset state information.

The generation submodule 2014 is configured to generate a feedback signal adapted for the control module based on the matching value and the state information.

The balancing control submodule 2015 is configured to perform a matching balancing control operation on the target battery based on the drive control signal.

In this optional embodiment, optionally, there is corresponding preset status information for each type of status information.

In this optional embodiment, optionally, for different types of status information, a certain status information may be specified to correspond to a certain string or multiple strings of battery cells. When corresponding to multiple strings of battery cells, this status information can represent the comprehensive situation of the multiple strings of battery cells under this status information, or it can be expressed in the form of a set of status sub-information, and each status sub-information uniquely corresponds to a certain string of battery cells in the multiple strings of battery cells.

It can be seen that the implementation of this optional embodiment allows the acquisition submodule in the analog front-end module to acquire the initial acquisition information of the target battery and receive the power supply signal for powering the analog front-end module, and allows the filtering submodule to perform a preset first filtering processing operation on the initial acquisition information to obtain the status information of the target battery, which can improve the generation accuracy of the status information of the target battery. The calculation submodule is configured to calculate the matching value used to represent the degree of matching between the status information and the corresponding preset status information. The generation submodule is configured to generate a feedback signal adapted for the control module based on the matching value and the status information, thereby improving the accuracy, adaptability and flexibility of information interaction between the battery management system and the control module, thereby improving the functional expansion flexibility, richness and compatibility of the battery management system. The balancing control submodule performs a matching balancing control operation on the target battery based on the drive control signal generated by the control module for the target battery based on the feedback signal, which can improve the accuracy of the battery management system's balancing control for the target battery, which is beneficial to ensuring the service life, safety and scientificity of the target battery.

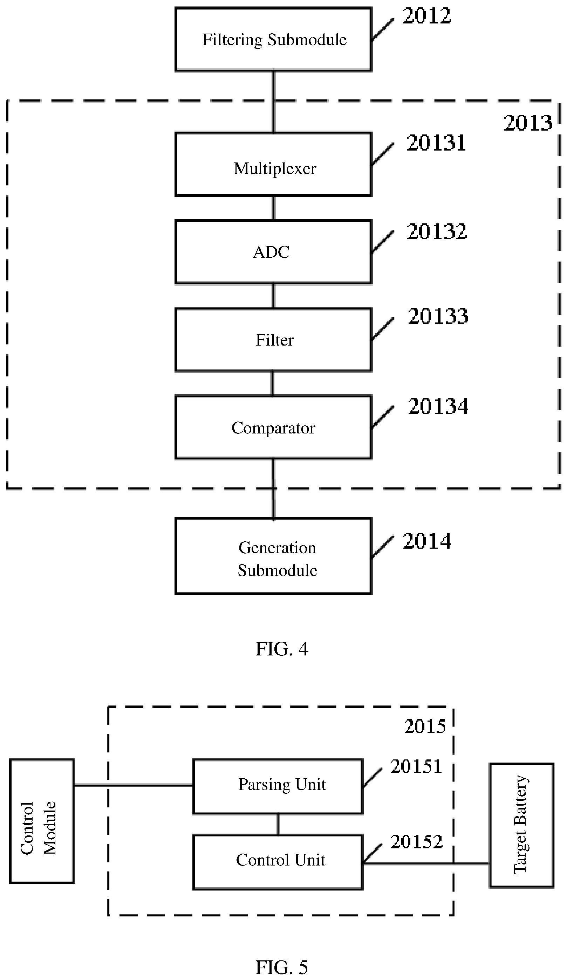

Optionally, as shown in FIG. 4 which is a schematic structural diagram of a calculation submodule according to an embodiment of the present application. The calculation submodule 2013 includes a multiplexer 20131, an ADC (Analog-to-Digital Converter) 20132, a filter 20133, and a comparator 20134.

A first terminal of the multiplexer 20131 is electrically connected to the second terminal of the filtering submodule 2012, a second terminal of the multiplexer 20131 is electrically connected to a first terminal of the ADC 20132, a second terminal of the ADC 20132 is electrically connected to a first terminal of the filter 20133, a second terminal of the filter 20133 is electrically connected to a first terminal of the comparator 20134, and a second terminal of the comparator 20134 is electrically connected to the first terminal of the generation submodule 2014.

It can be seen that the implementation of this optional embodiment discloses the structure of a specific calculation submodule, which passes the status information of the target battery through the multiplexer to the ADC, to filter it in the filter, and uses the comparator to calculate the matching value between the above-mentioned processed status information and the corresponding preset status information. This can further improve the calculation accuracy, feasibility and scientific nature of the matching value of the calculation submodule, which is beneficial to improving the accuracy, adaptability and flexibility of information interaction between the battery management system and the control module, and is beneficial to improving the integration accuracy and application efficiency of the battery management system.

In this optional embodiment, as another optional embodiment, as shown in FIG. 5 which is a schematic structural diagram of a balancing control submodule according to an embodiment of the present application. The balancing control submodule 2015 includes a parsing unit 20151 and a control unit 20152.

A first terminal of the parsing unit 20151 is electrically connected to the control module, a second terminal of the parsing unit 20151 is electrically connected to a first terminal of the control unit 20152, and a second terminal of the control unit 20152 is electrically connected to a target battery.

The parsing unit 20151 is configured to analyze the drive control signal to obtain a balancing control strategy for the target battery, where the balancing control strategy indicates at least one target battery cell to be balanced in the target battery and a control unit 20152 corresponding to each target battery cell.

The control unit 20152 is configured to perform a matching balancing control operation on the corresponding target battery cell based on the balancing control strategy.

Optionally, for the control unit, in a specific actual control scenario, different control units may be provided for different target battery cells, or all battery cells in the target battery may correspond to one control unit. This is related to the actual application scenario, and the embodiments of the present application do not make specific limitations on this.

It can be seen that the implementation of this optional embodiment allows the parsing unit in the balancing control submodule to parse the drive control signal generated by the control module connected to the battery management system to obtain a balancing control strategy indicating at least one target battery cell to be balanced in the target battery and a control unit corresponding to each target battery cell, and allows the control unit to perform a matching balancing control operation on the corresponding target battery cell based on the balancing control strategy obtained by the parsing unit, thereby improving the control accuracy, feasibility and scientificity of the balancing control submodule performing a matching balancing control operation on the target battery based on the drive control signal, which is beneficial to improving the accuracy of the battery management system's balancing control for the target battery and is beneficial to ensuring the service life, safety and scientificity of the target battery.

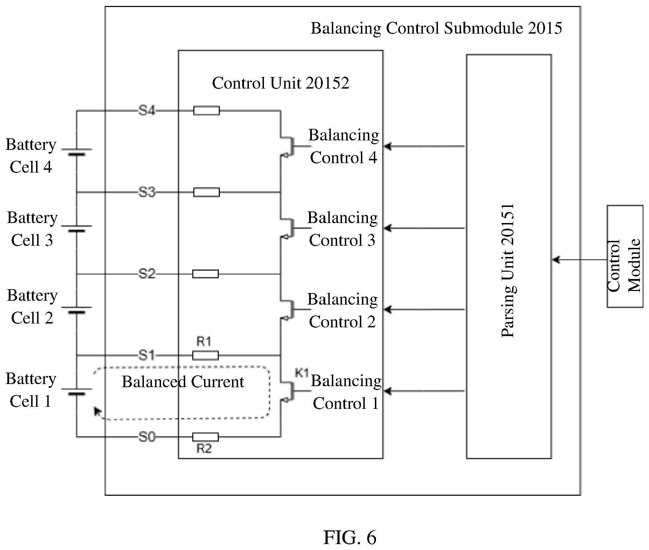

Optionally, as shown in FIG. 6 which is a schematic structural diagram of a balancing control submodule according to another embodiment of the present application. As shown in FIG. 6, the balancing control submodule 2015 includes a parsing unit 20151 and a control unit 20152. The control unit 20152 includes a first resistor R1, a second resistor R2, and a control switch K1.

For each target battery cell, the positive electrode of the target battery cell is electrically connected to a first terminal of the first resistor R1 in the control unit 20152 corresponding to the target battery cell, a second terminal of the first resistor R1 in the control unit 20152 corresponding to the target battery cell is electrically connected to a first terminal of the control switch K1 in the control unit 20152 corresponding to the target battery cell, a second terminal of the control switch K1 in the control unit 20152 corresponding to the target battery cell is electrically connected to the second terminal of the parsing unit 20151, a third terminal of the control switch K1 in the control unit 20152 corresponding to the target battery cell is electrically connected to a first terminal of the second resistor R2 in the control unit 20152 corresponding to the target battery cell, and a second terminal of the second resistor R2 in the control unit 20152 corresponding to the target battery cell is electrically connected to the negative electrode of the target battery cell.

In this optional embodiment, it should be noted that FIG. 6 shows a control unit 20152 corresponding to four strings of battery cells, such as battery cells 1 to 4 in FIG. 6. However, in this optional embodiment, further balancing control subdivision is performed for each of the four strings of battery cells. That is, if the balancing control strategy indicates that the target battery cell to be balanced in the target battery is battery cell 1, and the control unit 20152 corresponds to battery cell 1. For the control unit 20152, battery cell 1 can be connected in series with the first resistor R1, the second resistor R2, and the control switch K1 through the wiring harnesses S0 and S1 to form a loop, that is, the discharge of battery cell 1 achieves current consumption balancing; the same is true for battery cells 2 to 4. If the target battery cell is battery cell 2, the resistor in the wiring harness S2 is the first resistor R1, and the resistor in the wiring harness S1 is the second resistor R2, and so on. No further details are given.

It can be seen that the implementation of this optional embodiment discloses a specific structure of the balancing control submodule and the balancing control operation logic, which can ensure the control accuracy, feasibility and scientificity of the balancing control submodule performing the matching balancing control operation on the target battery based on the drive control signal, while improving the execution convenience, flexibility and efficiency of the balancing control operation of the balancing control submodule, which is conducive to improving the application convenience, scalability and efficiency of the battery management system.

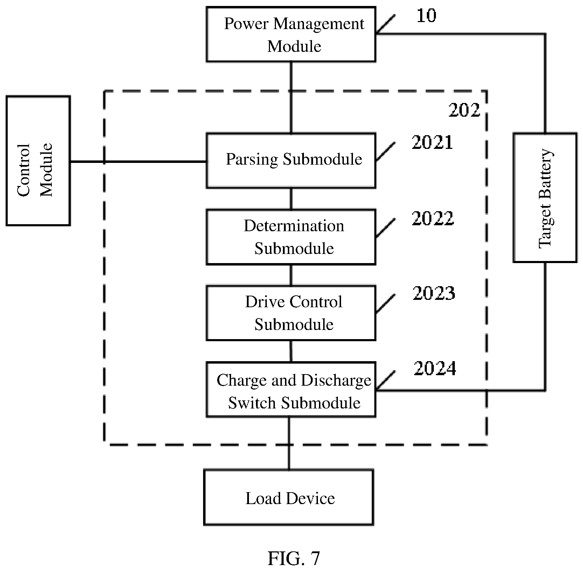

In an optional embodiment, as shown in FIG. 7 which is a schematic structural diagram of a gate driving module according to an embodiment of the present application. As shown in FIG. 7, the gate driving module 202 includes a parsing submodule 2021, a determination submodule 2022, a drive control submodule 2023, and a charge and discharge switch submodule 2024.

A first terminal of the parsing submodule 2021 is electrically connected to the control module, a second terminal of the parsing submodule 2021 is electrically connected to the first terminal of the power management module 10, a third terminal of the parsing submodule 2021 is electrically connected to a first terminal of the determination submodule 2022, a second terminal of the determination submodule 2022 is electrically connected to a first terminal of the drive control submodule 2023, a second terminal of the drive control submodule 2023 is electrically connected to a first terminal of the charge and discharge switch submodule 2024, a second terminal of the charge and discharge switch submodule 2024 is configured to be electrically connected to a target battery, and a third terminal of the charge and discharge switch submodule 2024 is configured to be electrically connected to a load device.

The parsing submodule 2021 is configured to parse the drive control signal to determine attribute information of the drive control signal, where the attribute information includes at least one of transmission channel information, conversion record information, signal type information, or signal form information.

The parsing submodule 2021 is further configured to receive a power supply signal;

The determination submodule 2022 is configured to determine a power control parameter corresponding to the drive control signal based on the attribute information.

The drive control submodule 2023 is configured to control the charge and discharge switch submodule 2024 to perform a matching power control operation on the target battery based on the power control parameter.

It can be seen that the implementation of this optional embodiment allows the parsing submodule in the gate driving module to parse the drive control signal generated by the control module to determine the attribute information of the drive control signal including at least one of transmission channel information, conversion record information, signal type information, or signal form information, allows the determination submodule to determine the power control parameter corresponding to the drive control signal based on the attribute information, and allows the drive control submodule to control the charge and discharge switch submodule to perform a matching power control operation on the target battery based on the power control parameter, thereby improving the power control accuracy of the gate driving module to perform a matching power control operation on the target battery based on the drive control signal, while improving the integration accuracy of the gate driving module, which is beneficial to improving the power control accuracy and control efficiency of the battery management system on the target battery, and is beneficial to ensuring the service life, safety and scientificity of the target battery.

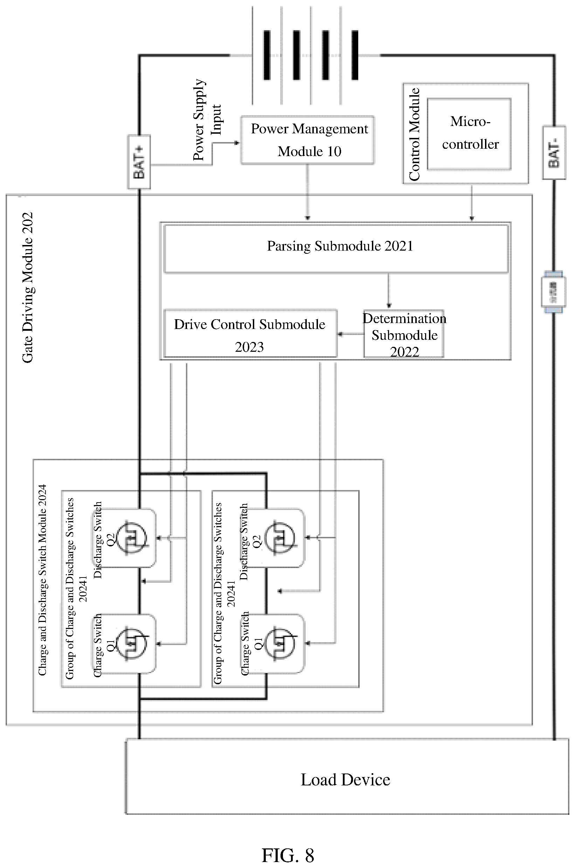

In this optional embodiment, as an optional implementation, as shown in FIG. 8 which is a schematic structural diagram of a gate driving module according to another embodiment of the present application. As shown in FIG. 8, the charge and discharge switch submodule 2024 in the gate driving module includes at least one group of charge and discharge switches 20241, and different attribute information corresponds to different groups of charge and discharge switches 20241. When the number of the groups of charge and discharge switches 20241 is greater than 1, the different groups of charge and discharge switches 20241 are electrically connected in parallel.

Optionally, for each group of charge and discharge switches 20241, a first terminal of the group of charge and discharge switches 20241 is electrically connected to a second terminal of the drive control submodule 2023, a second terminal of the group of charge and discharge switches 20241 is configured to electrically connect to a target battery, and a third terminal of the group of charge and discharge switches 20241 is configured to electrically connect to a load device.

Optionally, the group of charge and discharge switches 20241 includes a charge switch Q1 and a discharge switch Q2.

A first terminal of the charge switch Q1 is electrically connected to a first terminal of the discharge switch Q2, a second terminal of the charge switch Q1 is electrically connected to a load device, a third terminal of the charge switch Q1 is electrically connected to a second terminal of the drive control submodule 2023, a second terminal of the discharge switch Q2 is electrically connected to a target battery, and a third terminal of the discharge switch Q2 is electrically connected to the second terminal of the drive control submodule 2023.

In this optional embodiment, it should be noted that different attribute information corresponds to different groups of charge and discharge switches. For example, two groups of charge and discharge switches 20241 are shown in FIG. 8, and the two groups of charge and discharge switches 20241 are electrically connected in parallel. Optionally, when the attribute information is used to indicate that the input mode of the drive control signal is the SPI interface input mode or the direct hard-line input mode, the corresponding groups of charge and discharge switches are different. It should be noted that the groups of charge switch and the groups of discharge switch of different groups of charge and discharge switches are different.

In this optional embodiment, as shown in FIG. 8, this optional embodiment may include a control logic for a group of charge and discharge switches. For example, in FIG. 8, during the process in which the drive control submodule controls the charge and discharge switch submodule 2024 to perform a matching power control operation on the target battery based on the power control parameter, the control signal received by the upper group of charge and discharge switches is high, and the control signal received by the lower group of charge and discharge switches is high, that is, both groups of charge and discharge switches remain closed. At this time, the gate driving module may be in a normal operation mode. The control signal received by the upper group of charge and discharge switches is high, and the control signal received by the lower group of charge and discharge switches is low, that is, one of the two groups of charge and discharge switches is open and the other is closed. At this time, the gate driving module may be in a dormant operation mode. The control signal received by the upper group of charge and discharge switches is low, and the control signal received by the lower charge and discharge switches is low, that is, both groups of charge and discharge switches remain open. At this time, the gate driving module may be in an overcurrent fault mode. The control logic of the groups of charge and discharge switches is only a control logic set based on actual application scenarios. Other flexible settings can also be made based on actual application scenarios and the number of groups of charge and discharge switches. The embodiments of the present application do not specifically limit this.

It can be seen that the implementation of this optional embodiment discloses a specific structure of the gate driving module, which can improve the integration accuracy of the gate driving module, is beneficial to improving the power control accuracy, feasibility, control efficiency and scientificity of the battery management system for the target battery, and is beneficial to ensuring the service life, safety and scientificity of use of the target battery.

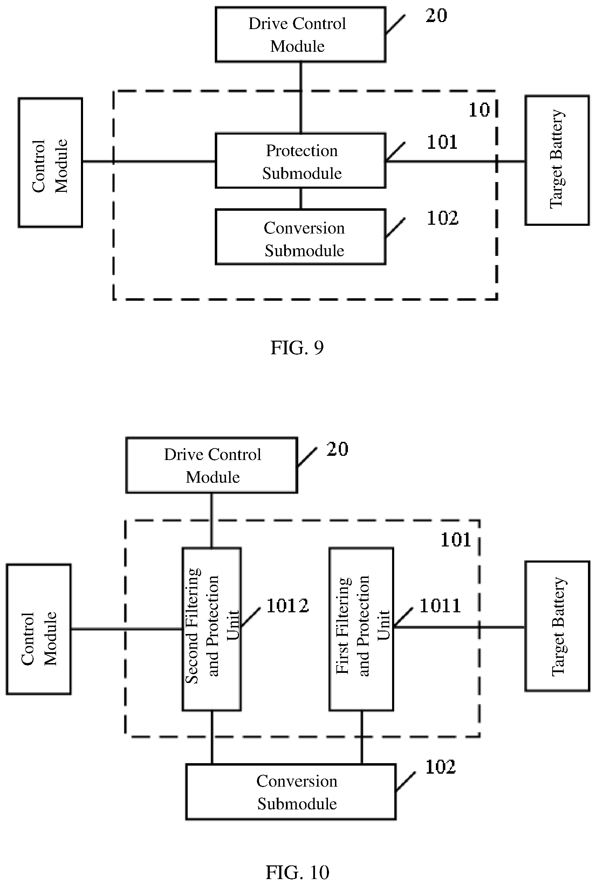

In another optional embodiment, as shown in FIG. 9 which is a schematic structural diagram of a power management module. As shown in FIG. 9, the power management module 10 includes a protection submodule 101 and a conversion submodule 102.

A first terminal of the protection submodule 101 is configured to electrically connect to a target battery, a second terminal of the protection submodule 101 is electrically connected to a first terminal of the conversion submodule 102, a third terminal of the protection submodule 101 is electrically connected to the first terminal of the drive control module 20, and a fourth terminal of the protection submodule 101 is configured to electrically connect to a control module.

The first terminal of the protection submodule 101 is configured to receive a power signal from a target battery.

The conversion submodule 102 is configured to convert the power signal into a backup power supply signal adapted for the target module.

The protection submodule 101 is further configured to perform a preset second filtering operation on the backup power supply signal to obtain a power supply signal adapted for the target module.

It can be seen that the implementation of this optional embodiment allows the protection submodule in the power management module to receive the power signal of the target battery, and allows the conversion submodule to convert the power signal into a backup power supply signal adapted for the target module, so that the protection submodule further performs a preset second filtering processing operation on the backup power supply signal to obtain a power supply signal adapted for the target module, thereby improving the operating stability of the battery management system and the control stability of battery management performed on the target battery, while further improving the integration degree and integration accuracy of the battery management system, simplifying the structure of the battery management system, and being conducive to improving the application flexibility and execution efficiency of the battery management system, and improving the flexibility and convenience of the battery management system in functional expansion and development when facing with different communication requirements, storage requirements, control chip processing energy efficiency requirements, etc., reducing the cost of development, deployment and maintenance of the battery management system, and being conducive to improving the richness and diversity of application scenarios of the battery management system.

In this optional embodiment, as an optional implementation, as shown in FIG. 10 which is a schematic structural diagram of a protection submodule. As shown in FIG. 10, the protection submodule 101 includes a first filtering and protection unit 1011 and a second filtering and protection unit 1012.

A first terminal of the first filtering and protection unit 1011 is electrically connected to a target battery, a second terminal of the first filtering and protection unit 1011 is electrically connected to the first terminal of the conversion submodule 102, a first terminal of the second filtering and protection unit 1012 is electrically connected to the first terminal of the conversion submodule 102, a second terminal of the second filtering and protection unit 1012 is electrically connected to the first terminal of the drive control module 20, and a third terminal of the second filtering and protection unit 1012 is electrically connected to the control module.

The first filtering and protection unit 1011 is configured to receive a power signal from a target battery.

The second filtering and protection unit 1012 is configured to perform a preset second filtering operation on the backup power supply signal to obtain a power supply signal adapted for the target module.

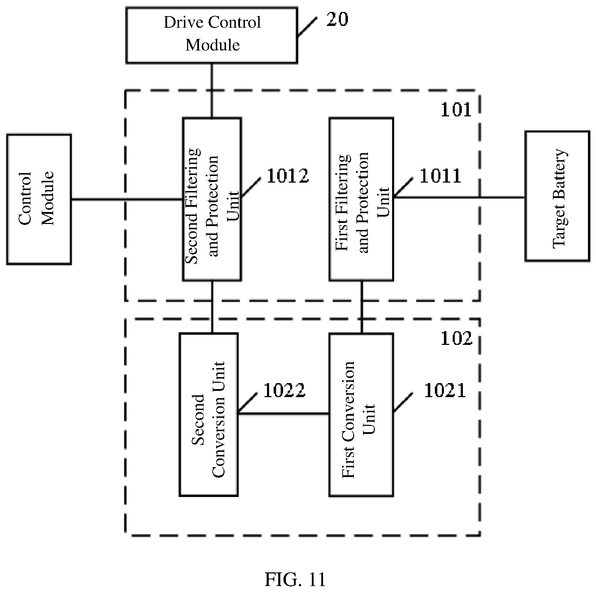

Optionally, as shown in FIG. 11 which is a schematic structural diagram of a conversion submodule. As shown in FIG. 11, the conversion submodule 102 includes a first conversion unit 1021 and at least one second conversion unit 1022. Each second conversion unit 1022 corresponds to at least one target module. The first conversion unit 1021 is a boost unit, and the second conversion unit 1022 is at least one of a buck unit, a linear regulator, or a charge pump.

A first terminal of the first conversion unit 1021 is electrically connected to the second terminal of the first filtering and protection unit 1011, a second terminal of the first conversion unit 1021 is electrically connected to a first terminal of the second conversion unit 1022, and a second terminal of the second conversion unit 1022 is electrically connected to the first terminal of the second filtering and protection unit 1012.

The first conversion unit 1021 is configured to convert the power signal into an initial power supply signal;
The second conversion unit 1022 is configured to convert the initial power supply signal into the backup power supply signal adapted for the target module.

It can be seen that the implementation of this optional embodiment discloses a specific structure of a protection submodule and a conversion submodule, which allows the first filtering and protection unit in the protection submodule to receive the power signal of the target battery, allows the second filtering and protection unit to perform a preset second filtering processing operation on the preliminary power supply signal to obtain a power supply signal adapted for the target module. In addition, on the basis that the first conversion unit in the conversion submodule converts the power signal into an initial power supply signal, the second conversion unit converts the initial power supply signal into a backup power supply signal adapted for the target module. It can improve the adaptation accuracy of the power supply signals for different target modules, improve the flexibility and convenience of the functional expansion and development of the battery management system when facing with different communication requirements, storage requirements, control chip processing energy efficiency requirements, etc., reduce the cost of development, deployment and maintenance of the battery management system, and is conducive to improving the richness and diversity of application scenarios of the battery management system, improving the integration accuracy of the battery management system, and helping to improve the application efficiency of the battery management system.

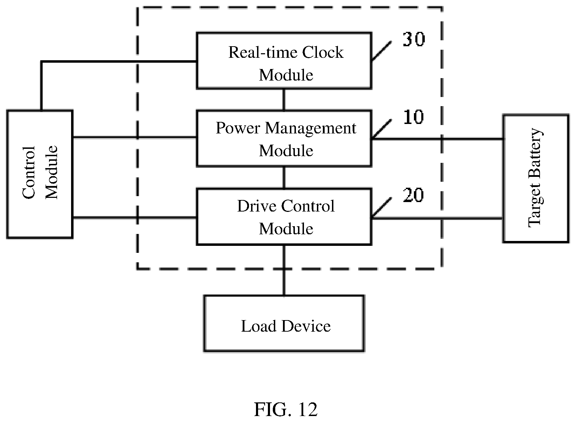

In yet another optional embodiment, as shown in FIG. 12 which is a schematic structural diagram of an integrated battery management system. As shown in FIG. 12, the system further includes a real-time clock module 30.

A first terminal of the real-time clock module 30 is electrically connected to the fourth terminal of the power management module 10, and a second terminal of the real-time clock module 30 is configured to electrically connect to the control module. The target module also includes a real-time clock module 30.

The real-time clock module 30 is configured to generate clock information and send the clock information to the control module, and receive the power supply signal. The clock information is configured to instruct the control module to sleep or wake up.

It can be seen that the implementation of this optional embodiment can improve the control accuracy of the battery management system by integrating a real-time clock module into the battery management system. In addition, it gets rid of the clock dependence of the control module in the related technology, improves the operating stability of the battery management system, and improves the integration of the battery management system. It is beneficial to improve the flexibility and convenience of the battery management system in functional expansion and development when facing with different communication requirements, storage requirements, control chip processing energy efficiency requirements, etc., reduces the cost of development, deployment and maintenance of the battery management system, and is beneficial to improving the richness and diversity of the application scenarios of the battery management system, improving the integration accuracy of the battery management system, and improving the application efficiency of the battery management system.

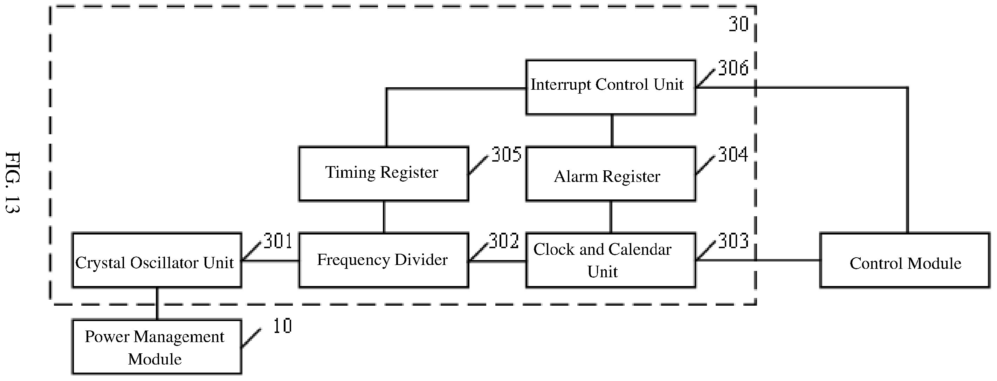

In this optional embodiment, as an optional implementation, as shown in FIG. 13 is a schematic structural diagram of a real-time clock module. As shown in FIG. 13, the real-time clock module includes a crystal oscillator unit 301, a frequency divider 302, a clock and calendar unit 303, an alarm register 304, a timing register 305, and an interrupt control unit 306.

A first terminal of the crystal oscillator unit 301 is electrically connected to the fourth terminal of the power management module 10, a second terminal of the crystal oscillator unit 301 is electrically connected to a first terminal of the frequency divider 302, a second terminal of the frequency divider 302 is electrically connected to a first terminal of the clock and calendar unit 303 and a first terminal of the timing register 305, a second terminal of the clock and calendar unit 303 is electrically connected to the control module, a third terminal of the clock and calendar unit 303 is electrically connected to a first terminal of the alarm register 304, a first terminal of the interrupt control unit 306 is electrically connected to a second terminal of the alarm register 304 and a second terminal of the timing register 305, and a second terminal of the interrupt control unit 306 is electrically connected to the control module.

In this optional embodiment, the crystal oscillator built into the real-time clock module is optionally 32.768kHz which is given to the clock and calendar unit and the timing register by a frequency divider. The clock and calendar unit can give the clock and calendar information to the control module through the SPI communication interface, and the alarm register serves as the alarm function of the clock and calendar unit, and is output to the interrupt control unit to give it to the control module, and the timing register serves as a timing output to give it to the interrupt control unit.

It can be seen that the implementation of this optional embodiment discloses a specific structure of a real-time clock module independent of the control module in a specific battery management system, which can improve the control accuracy and feasibility of the battery management system through a crystal oscillator unit, a frequency divider, a clock and calendar unit, an alarm register, a timing register and an interrupt control unit. In addition, it supports getting rid of the clock dependence on the control module in related technologies, improves the operating stability of the battery management system, and improves the integration of the battery management system. It is beneficial to improve the flexibility and convenience of functional expansion and development of the battery management system when facing with different communication requirements, storage requirements, control chip processing energy efficiency requirements, etc., reduces the cost of development, deployment and maintenance of the battery management system, is beneficial to improving the richness and diversity of application scenarios of the battery management system, improves the integration accuracy of the battery management system, and is beneficial to improving the application efficiency of the battery management system.

The present application discloses an integrated battery management device, which includes a device body, wherein the device also includes the integrated battery management system described in the first embodiment of the present application.

## Claims

1. An integrated battery management system, comprising a power management module and a drive control module, wherein:
a first terminal of the power management module is electrically connected to a first terminal of the drive control module, a second terminal of the power management module and a second terminal of the drive control module are both configured to electrically connect to a target battery, a third terminal of the power management module and a third terminal of the drive control module are both configured to electrically connect to a control module, and a fourth terminal of the drive control module is configured to electrically connect to a load device;
the power management module is configured to receive a power signal of the target battery and convert the power signal into a power supply signal adapted for a target module, wherein the target module comprises the drive control module and the control module;
the drive control module is configured to acquire status information of the target battery and receive the power supply signal, and convert the status information into a feedback signal adapted for the control module, so that the control module generates a drive control signal for the target battery based on the feedback signal;
the drive control module is further configured to perform a matching battery drive control operation on the target battery based on the drive control signal, wherein the battery drive control operation comprises at least one of a balancing control operation or a power control operation.

2. The integrated battery management system according to claim 1, wherein the drive control module comprises an analog front-end module and a gate driving module, wherein:
a first terminal of the analog front-end module and a first terminal of the gate driving module are both electrically connected to the first terminal of the power management module, a second terminal of the analog front-end module and a second terminal of the gate driving module are both configured to electrically connect to the target battery, a third terminal of the analog front-end module and a third terminal of the gate driving module are both configured to electrically connect to the control module, and a fourth terminal of the gate driving module is configured to electrically connect to the load device;
the analog front-end module is configured to acquire the status information of the target battery and receive the power supply signal, and convert the status information into the feedback signal adapted for the control module, so that the control module generates the drive control signal for the target battery based on the feedback signal;
the analog front-end module is further configured to perform a matching balancing control operation on the target battery based on the drive control signal;
the gate driving module is configured to perform a matching power control operation on the target battery based on the drive control signal, and receive the power supply signal.

3. The integrated battery management system according to claim 2, wherein the analog front-end module comprises an acquisition submodule, a filtering submodule, a calculation submodule, a generation submodule, and a balancing control submodule, wherein:
a first terminal of the acquisition submodule is electrically connected to the first terminal of the power management module, a second terminal of the acquisition submodule is configured to electrically connect to the target battery, a third terminal of the acquisition submodule is electrically connected to a first terminal of the filtering submodule, a second terminal of the filtering submodule is electrically connected to a first terminal of the calculation submodule, a second terminal of the calculation submodule is electrically connected to a first terminal of the generation submodule, a second terminal of the generation submodule is configured to electrically connect to the control module, a first terminal of the balancing control submodule is configured to electrically connect to the control module, and a second terminal of the balancing control submodule is configured to electrically connect to the target battery;
the acquisition submodule is configured to acquire an initial acquisition information of the target battery and receive the power supply signal;
the filtering submodule is configured to perform a preset first filtering operation on the initial acquisition information to obtain the status information;
the calculation submodule is configured to calculate a matching value between the state information and corresponding preset state information, wherein the matching value indicates a degree of matching between the state information and the corresponding preset state information;
the generation submodule is configured to generate the feedback signal adapted for the control module based on the matching value and the state information;
the balancing control submodule is configured to perform the matching balancing control operation on the target battery based on the drive control signal;
the calculation submodule comprises a multiplexer, an analog-to-digital converter (ADC), a filter, and a comparator, wherein:
a first terminal of the multiplexer is electrically connected to the second terminal of the filtering submodule, a second terminal of the multiplexer is electrically connected to a first terminal of the ADC, a second terminal of the ADC is electrically connected to a first terminal of the filter, a second terminal of the filter is electrically connected to a first terminal of the comparator, and a second terminal of the comparator is electrically connected to the first terminal of the generation submodule.

4. The integrated battery management system according to claim 3, wherein the balancing control submodule comprises a parsing unit and a control unit, wherein:
a first terminal of the parsing unit is electrically connected to the control module, a second terminal of the parsing unit is electrically connected to a first terminal of the control unit, and a second terminal of the control unit is electrically connected to the target battery;
the parsing unit is configured to parse the drive control signal to obtain a balancing control strategy for the target battery, wherein the balancing control strategy indicates at least one target battery cell to be balanced in the target battery and the control unit corresponding to each of the at least one target battery cell;
the control unit is configured to perform the matching balancing control operation on the corresponding target battery cell according to the balancing control strategy;
the control unit comprises a first resistor, a second resistor and a control switch, wherein:
for each target battery cell, a positive electrode of the target battery cell is electrically connected to a first terminal of the first resistor in the control unit corresponding to the target battery cell, a second terminal of the first resistor in the control unit corresponding to the target battery cell is electrically connected to a first terminal of the control switch in the control unit corresponding to the target battery cell, a second terminal of the control switch in the control unit corresponding to the target battery cell is electrically connected to the second terminal of the parsing unit, a third terminal of the control switch in the control unit corresponding to the target battery cell is electrically connected to a first terminal of the second resistor in the control unit corresponding to the target battery cell, and a second terminal of the second resistor in the control unit corresponding to the target battery cell is electrically connected to a negative electrode of the target battery cell.

5. The integrated battery management system according to any one of claims 2 to 4, wherein the gate driving module comprises a parsing submodule, a determination submodule, a drive control submodule and a charge and discharge switch submodule, wherein:
a first terminal of the parsing submodule is electrically connected to the control module, a second terminal of the parsing submodule is electrically connected to the first terminal of the power management module, a third terminal of the parsing submodule is electrically connected to a first terminal of the determination submodule, a second terminal of the determination submodule is electrically connected to a first terminal of the drive control submodule, a second terminal of the drive control submodule is electrically connected to a first terminal of the charge and discharge switch submodule, a second terminal of the charge and discharge switch submodule is electrically connected to the target battery, and a third terminal of the charge and discharge switch submodule is electrically connected to the load device;
the parsing submodule is configured to parse the drive control signal to determine attribute information of the drive control signal, wherein the attribute information comprises at least one of transmission channel information, conversion record information, signal type information, or signal form information;
the parsing submodule is further configured to receive the power supply signal;
the determination submodule is configured to determine a power control parameter corresponding to the drive control signal based on the attribute information;
the drive control submodule is configured to control the charge and discharge switch submodule to perform the matching power control operation on the target battery based on the power control parameter.

6. The integrated battery management system according to claim 5, wherein the charge and discharge switch submodule comprises one or more groups of charge and discharge switches each corresponding to distinct attribute information, wherein groups of charge and discharge switches are electrically connected in parallel under a condition that the charge and discharge switch submodule comprises more than one groups of charge and discharge switches;
wherein for each group of charge and discharge switches, a first terminal of the group of charge and discharge switches is electrically connected to the second terminal of the drive control submodule, a second terminal of the group of charge and discharge switches is configured to electrically connect to the target battery, and a third terminal of the group of charge and discharge switches is configured to electrically connect to the load device;
wherein the group of charge and discharge switches comprises a charge switch and a discharge switch, wherein:
a first terminal of the charge switch is electrically connected to a first terminal of the discharge switch, a second terminal of the charge switch is electrically connected to the load device, a third terminal of the charge switch is electrically connected to the second terminal of the drive control submodule, a second terminal of the discharge switch is electrically connected to the target battery, and a third terminal of the discharge switch is electrically connected to the second terminal of the drive control submodule.

7. The integrated battery management system according to any one of claims 1 to 6, wherein the power management module comprises a protection submodule and a conversion submodule, wherein:
a first terminal of the protection submodule is configured to electrically connect to the target battery, a second terminal of the protection submodule is electrically connected to a first terminal of the conversion submodule, a third terminal of the protection submodule is electrically connected to the first terminal of the drive control module, and a fourth terminal of the protection submodule is configured to electrically connect to the control module;
the protection submodule is configured to receive the power signal of the target battery;
the conversion submodule is configured to convert the power signal into a backup power supply signal adapted for the target module;
the protection submodule is further configured to perform a preset second filtering operation on the backup power supply signal to obtain the power supply signal adapted for the target module.

8. The integrated battery management system according to claim 7, wherein the protection submodule comprises a first filtering and protection unit and a second filtering and protection unit, wherein:
a first terminal of the first filtering and protection unit is electrically connected to the target battery, a second terminal of the first filtering and protection unit is electrically connected to the first terminal of the conversion submodule, a first terminal of the second filtering and protection unit is electrically connected to the first terminal of the conversion submodule, a second terminal of the second filtering and protection unit is electrically connected to the first terminal of the drive control module, and a third terminal of the second filtering and protection unit is electrically connected to the control module;
the first filtering and protection unit is configured to receive the power signal of the target battery;
the second filtering and protection unit is configured to perform the preset second filtering operation on the backup power supply signal to obtain the power supply signal adapted for the target module;
the conversion submodule comprises a first conversion unit and at least one second conversion unit, wherein each second conversion unit corresponds to at least one target module, the first conversion unit is a boost unit, and the second conversion unit is at least one of a buck unit, a linear regulator, or a charge pump, wherein:
a first terminal of the first conversion unit is electrically connected to the second terminal of the first filtering and protection unit, a second terminal of the first conversion unit is electrically connected to a first terminal of the second conversion unit, and a second terminal of the second conversion unit is electrically connected to the first terminal of the second filtering and protection unit;
the first conversion unit is configured to convert the power signal into an initial power supply signal;
the second conversion unit is configured to convert the initial power supply signal into the backup power supply signal adapted for the target module.

9. The integrated battery management system according to any one of claims 1 to 8, further comprising a real-time clock module, wherein:
a first terminal of the real-time clock module is electrically connected to a fourth terminal of the power management module, a second terminal of the real-time clock module is configured to electrically connect to the control module, and the target module further comprises the real-time clock module;
the real-time clock module is configured to generate clock information and transmit the clock information to the control module, and receive the power supply signal, wherein the clock information is configured to instruct the control module to sleep or wake up.

10. The integrated battery management system according to claim 9, wherein the real-time clock module comprises a crystal oscillator unit, a frequency divider, a clock and calendar unit, an alarm register, a timing register and an interrupt control unit, wherein:
a first terminal of the crystal oscillator unit is electrically connected to the fourth terminal of the power management module, a second terminal of the crystal oscillator unit is electrically connected to a first terminal of the frequency divider, a second terminal of the frequency divider is electrically connected to a first terminal of the clock and calendar unit and a first terminal of the timing register, a second terminal of the clock and calendar unit is configured to electrically connect to the control module, a third terminal of the clock and calendar unit is electrically connected to a first terminal of the alarm register, a first terminal of the interrupt control unit is electrically connected to a second terminal of the alarm register and a second terminal of the timing register, and a second terminal of the interrupt control unit is configured to electrically connect to the control module.

11. An integrated battery management device, comprising a device body and the integrated battery management system according to any one of claims 1 to 10.
